# EUROPÄISCHE PATENTSCHRIFT

(11) **EP 1 577 996 B1**
(45) Veröffentlichungstag und Bekanntmachung des Hinweises auf die Patenterteilung: **07.07.2010**
(21) Anmeldenummer: 05101880.2
(22) Anmeldetag: 10.03.2005
(51) Int. Cl.: H02G 3/32

(54) **Halteelement für Leitungsstränge**
Holding element for cable harness
Organe de retenue pour un faisceau de lignes

(30) Priorität: 17.03.2004 DE 102004013346
(43) Veröffentlichungstag der Anmeldung: 21.09.2005
(73) Patentinhaber: HILTI Aktiengesellschaft, 9494 Schaan (LI)
(72) Erfinder: Hoffmann, Armin, 86899, Landsberg (DE)
(74) Vertreter: Wildi, Roland

(56) Entgegenhaltungen:
- DE-A1- 2 530 235

## Beschreibung

Die vorliegende Erfindung betrifft ein Halteelement für Leitungsstränge, insbesondere Kabelstränge, der im Oberbegriff des Patentanspruchs 1 genannten Art. Derartige Halteelemente dienen dem Festlegen von Leitungssträngen, wie Kabelsträngen an Bauteilen oder sonstigen Untergründen.

Aus der DE 44 26 404 C2 ist eine an einem flächigen Untergrund anbringbare Anordnung zum lösbaren Festlegen von elektrischen Leitungsdrähten bekannt. Dort ist eine den Draht lösbar haltende Halterung an einem länglichen, von einer Trägerteilplatte senkrecht abstehenden Träger angeordnet. Von Nachteil hierbei ist, dass durch das Abstehen der Halterung von der Trägerplatte bei einer Aussenmontage Gegenstände wie herumfliegende Äste - oder bei einer Montage in Bodennähe auch kleine Steine gegen die Halterung geschleudert oder geweht werden können, die zu einer Beschädigung der Halterung bis hin zu einem Abreissen der Halterung vom Träger führen können.

Bei einem gattungsgemässen Halteelement in Form einer Universalklemmschelle EKS-UNI der Anmelderin ist es bekannt, zwei Halteglieder von einer Basis abragend anzuordnen, die einen annähernd kreisförmigen Durchführungsraum für einen Leitungsstrang bereichsweise umfassen. Die freien Enden der Halteglieder lassen eine Öffnung zum Durchführungsraum frei und sind elastisch aufweitbar, um einen Leitungsstrang mit einem Durchmesser, der grösser ist als die Weite der Öffnung, durch die Öffnung in den Durchführungsraum einlegen bzw. einklipsen zu können. Über einen Befestigungsabschnitt an der Basis des Halteelements kann dieses mittels eines Befestigungselementes, wie z. B. einer Schraube oder einem Nagel, an einem Untergrund oder einem Bauteil befestigt werden.

Nachteilig ist auch hier, dass die senkrecht von der Basis abragenden Halteglieder eine relativ grosse Angriffsfläche für herumfliegende oder aufgewirbelte Gegenstände, wie Äste oder kleinere Steine, bieten. Insbesondere bei der Verwendung der Halteelemente als Kabelhalter an Bahntrassen kann es so zu Beschädigungen der Halteelemente und ggf. zu einem Ausreissen der Kabel aus den Halteelementen kommen.

Ein Halteelement gemäß dem Oberbegriff des Anspruchs 1 ist aus DE 2 530 255 A bekannt.

Die Aufgabe der vorliegenden Erfindung liegt daher darin, ein Halteelement für Leitungsstränge bereitzustellen, das günstig herzustellen ist und das wenig anfällig für Beschädigungen durch herumfliegende oder aufgewirbelte Gegenstände ist.

Diese Aufgabe wird erfindungsgemäss durch die in Anspruch 1 genannten Massnahmen erreicht. Demnach ist das Halteelement im Wesentlichen flach-kegelförmig ausgebildet, wobei die Halteglieder jeweils Kegelflanken des Halteelementes ausbilden. Das erfindungsgemässe Halteelement bietet somit nur geringe Angriffsflächen aus, die aufgrund ihrer geneigten Lage leicht von einem bewegten Gegenstand überwunden werden können, ohne selbst beschädigt zu werden. Die Basis des Halteelements kann dabei noch plattig bzw. flach-zylindrisch ausgebildet sein.

Als flach-kegelförmig im Sinne der Erfindung werden dabei kegel- oder kegelstumpfförmige Körper inklusive der Untergruppe der pyramiden- bzw. pyramidenstumpfförmigen Körper angesehen, deren Höhe parallel zu Kegelachse bzw. senkrecht zur Basis kleiner ist als die grösste Weite der Basis senkrecht zur dieser Kegelachse.

Vorteilhaft ist die Höhe des Halteelements höchstens halb so gross wie die grösste Weite der Basis. Hierdurch wird ein sehr flacher Habitus des Halteelements erzeugt, bei dem die möglichen seitlichen Angriffsflächen minimiert sind.

Günstig ist es auch, wenn die Halteglieder als Klemmglieder ausgebildet sind, deren dem Durchführungsraum zugewandte Innenseiten bogenförmig gewölbt ausgebildet sind. Hierdurch wird der Durchführungsraum im Wesentlichen kreisförmig gehalten. Die vorzugsweise elastisch federnden Klemmglieder ermöglichen das Einlegen von Leitungssträngen in den Durchführungsraum, die einen Durchmesser aufweisen, der grösser ist als die Weite der Öffnung zwischen den freien Enden der Klemmglieder bzw. Halteglieder.

Von Vorteil ist es ferner, wenn die Basis eine Ansatzfläche zum Ansetzen an ein Bauteil aufweist, die im Ausgangszustand in Richtung des Durchführungsraums aufgewölbt ist. Diese Aufwölbung der Ansatzfläche wird beim Festlegen des Halteelements an ein Bauteil bzw. einen Untergrund mittels eines Befestigungsmittels zur Oberfläche des Bauteils/Untergrunds durchgedrückt, wobei eine Abdichtung der Befestigungsstelle rund um den Befestigungsabschnitt erfolgt.

In einer günstigen Variante weist das Halteelement einen kreiskegelförmigen Habitus und die Basis einen runden Querschnitt auf.

In einer weiteren günstigen Variante weist das Halteelement einen pyramidalen Habitus und die Basis einen vieleckigen Querschnitt auf.

Vorteilhaft besteht das Halteelement aus einem duktilen, hoch-schlagzähen bis elastomeren Material, so dass Schläge bzw. Treffer von Gegenständen auch elastisch aufgefangen und gedämpft werden können.

Weiter vorteilhaft besteht das Halteelement aus Reifengummi, insbesondere schwarz gefärbtem Reifengummi, wodurch neben den elastischen Eigenschaften auch eine hohe Lebensdauer und UV-Beständigkeit erreicht wird.

Günstig kann es ferner sein, wenn das Halteelement als dünnwandiger Hohlkörper ausgebildet ist, der z. B. im Kunststoff-Spritzgussverfahren hergestellt worden ist. Durch diese Massnahme ist das Halteelement günstig herzustellen und weist eine hohe Festigkeit und Schlagzähigkeit auf.

Vorteilhaft weist das Halteelement wenigstens einen geschlossenen Hohlraum auf, wodurch seine Schlagzähigkeit weiter gesteigert werden kann. Ein derartiges Halteelement kann z. B. im Spritzguss-Gasinnendruckverfahren hergestellt werden.

Weiter vorteilhaft ist ein umlaufender Rand der Basis als Dichtlippe ausgebildet, wodurch die Dichtungseigenschaften des Halteelements gegenüber dem Befestigungspunkt weiter verbessert werden.

In einer günstigen herzustellenden Variante besteht das Halteelement aus einem thermoplastischen Kunststoff.

Weitere Vorteile und Massnahmen der Erfindung ergeben sich aus den Unteransprüchen, der nachfolgenden Beschreibung und den Zeichnungen. In den Zeichnungen ist die Erfindung in zwei Ausführungsbeispielen dargestellt.

Es zeigen:
- Fig. 1: ein erfindungsgemässes Halteelement in perspektivischer Ansicht,
- Fig. 2: das Halteelement aus Fig. 1 in Ansicht von oben,
- Fig. 3: das Halteelement aus Fig. 1 in einer Seitenansicht,
- Fig. 4: das Halteelement in einem Schnitt entlang der Linie IV - IV in Fig. 2,
- Fig. 5: das Halteelement in einem Schnitt analog zu Fig. 4 in an einem Bauteil befestigter Lage,
- Fig. 6: ein weiteres Halteelement in Ansicht von oben,
- Fig. 7: ein weiteres Halteelement in einem Schnitt analog zu Fig. 4,
- Fig. 8: ein weiteres Halteelement in einem Schnitt analog zu Fig. 4.

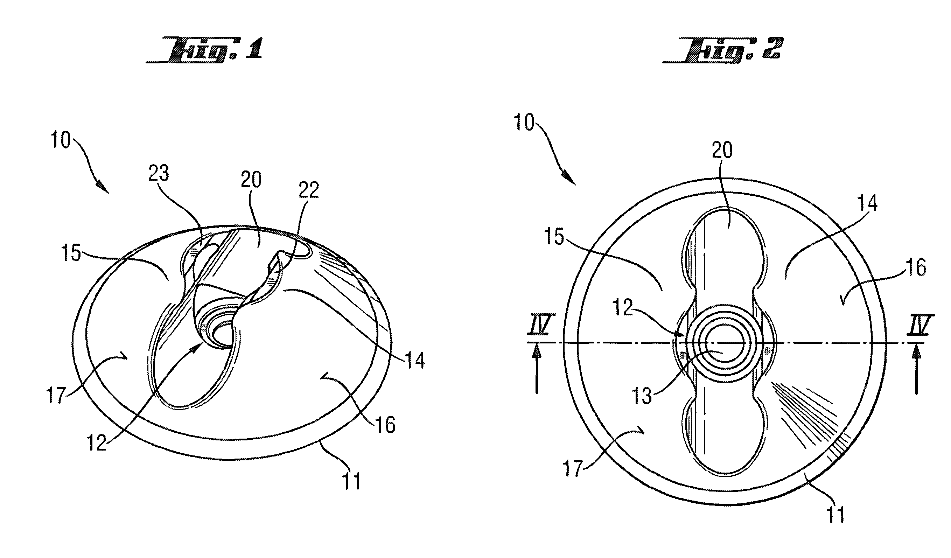

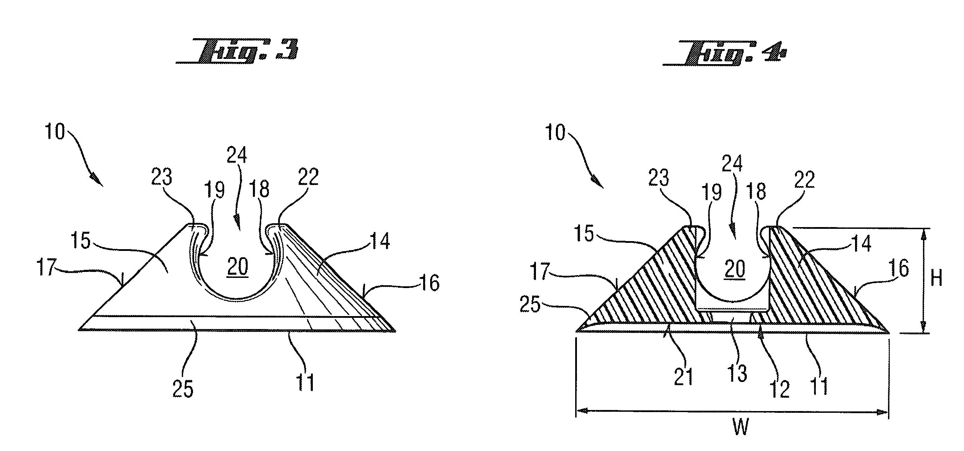

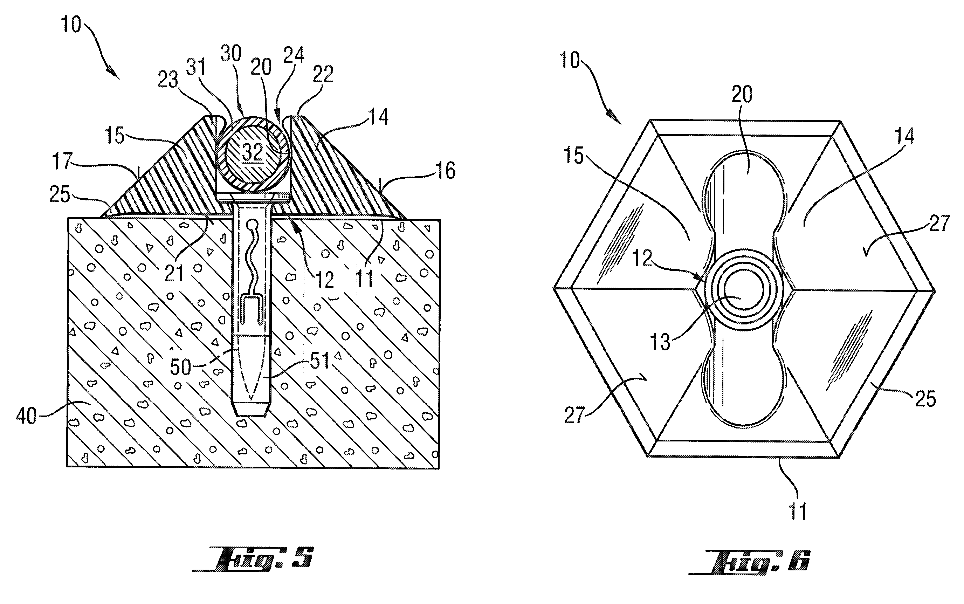

Das in den Figuren 1 bis 5 dargestellte Halteelement 10 weist eine kreiskegelförmige Form auf die im Wesentlichen durch zwei Halteglieder 14, 15 bestimmt wird, die von einer Basis 11 abragen. Die Halteglieder 14, 15 bilden Kegelflanken 16, 17 aus, die sich von der Basis 11 bis zu freien Enden 22, 23 der Halteglieder 14, 15 erstrecken. Zwischen den beiden Haltegliedern 14, 15, die als klauenförmige Klemmglieder bzw. Klemmbacken ausgebildet sind, ist ein Durchführungsraum 20 aufgespannt, der der Aufnahme eines Leitungsstranges 30, wie z. B. eines Kabels mit Kabelmantel 31 und Kabellitze 32, dient (vgl. Fig. 5). Zwischen den beiden freien Enden 22, 23 der beiden Halteglieder 14, 15 ist eine Öffnung 24 angeordnet, über die der Leitungsstrang 30 in den Durchführungsraum 20 eingebracht werden kann. Die beiden Halteglieder sind dabei an ihren Innenseiten 18, 19, die dem Durchführungsraum 20 zugewandt sind bogenförmig gewölbt ausgebildet.

Zentral im Bereich der Basis 11 unterhalb des Durchführungsraums 20 ist ein Befestigungsabschnitt 12 mit einem Durchbruch 13 zur Aufnahme eines Befestigungsmittels 50, wie z. B. einer Schraube, eines Nagels o. ä., angeordnet.

Die Höhe H des Halteelements 10 ist weniger als halb so gross wie die Weite W (die hier dem Durchmesser der kreisrunden Basis 11 entspricht) der Basis 11. Durch die flachkegelförmige Form des Halteelementes 10 bietet dieses wenig Angriffsfläche für umher fliegende oder -rollende Gegenstände wie Steine, Äste oder dergleichen. Trifft ein Gegenstand auf das Halteelement 10 auf, dann wird er von den Kegelflanken 16, 17 über das Halteelement 10 hinweggeführt, ohne dieses zu beschädigen. Das Halteelement 10 besteht vorliegend aus einem hoch-schlagzähen, elastomeren Material, wie beispielsweise Reifengummi.

In Fig. 5 wurde das erfindungsgemässe Halteelement 10 mittels eines Befestigungsmittels 50, wie einer Schraube, und einem Dübel 51 an einem Bauteil 40, wie z. B. einer Bahnschwelle, festgelegt. Die Ansatzfläche 21 der Basis 11 des Halteelements 10 wurde dabei an die Oberfläche des Bauteils 40 derart angedrückt, dass die Befestigungsstelle unterhalb des Befestigungsabschnitts 12 über den dicht am Bauteil 40 anliegenden Rand des Halteelements 10 mit der Dichtlippe 25 abgedichtet ist.

In den Durchführungsraum 20 ist ein Leitungsstrang 30 in Form eine Kabels eingeklipst und wird dort über die freien Enden 22, 23 der Halteglieder 14, 15 festgehalten.

Das in Fig. 6 dargestellte Halteelement 10 unterscheidet sich im Wesentlichen nur dadurch von dem zuvor beschriebenen, dass es eine flach-pyramidale Form mit einer 6-eckigen Basis 11 aufweist. Die Kegelflanken werden dabei durch sechs Pyramidenflächen 27 gebildet. Wegen weiterer hier nicht erwähnter Bezugszeichen wird vollumfänglich Bezug genommen auf die vorhergehende Beschreibung zu den Figuren 1 bis 5.

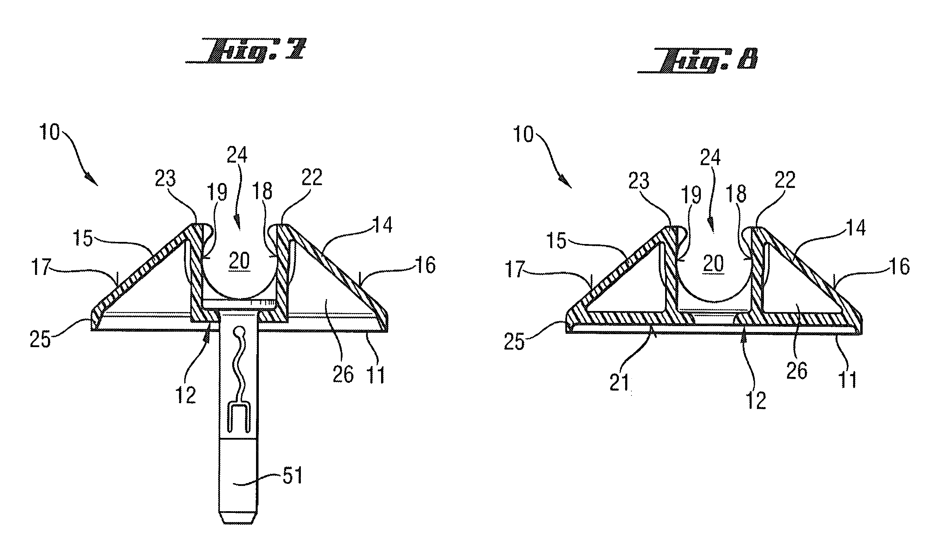

Das in Fig. 7 dargestellte Halteelement 10 besteht aus einem hoch-schlagzähen thermoplastischen Kunststoff und unterscheidet sich im Wesentlichen nur dadurch von den zuvor beschriebenen, dass es als im Kunststoff-Spritzgussverfahren hergestellter Hohlkörper 26 ausgebildet ist. Anstelle einer gewölbten Ansatzfläche ist dort die Dichtlippe 25 axial etwas tieferliegend angeordnet als der Befestigungsabschnitt 12. Wegen weiterer hier nicht erwähnter Bezugszeichen wird vollumfänglich Bezug genommen auf die vorhergehende Beschreibung zu den Figuren 1 bis 6.

Das in Fig. 8 dargestellte Halteelement 10 besteht aus einem hoch-schlagzähen thermoplastischen Kunststoff und unterscheidet sich im Wesentlichen nur dadurch von den zuvor beschriebenen, dass es als im Spritzguss-Gasinnendruckverfahren hergestellter Hohlkörper ausgebildet ist, der wenigstens einen geschlossenen Hohlraum 26 aufweist. An der Basis 11 ist dort wieder eine gewölbte Ansatzfläche 21 ausgebildet. Wegen weiterer hier nicht erwähnter Bezugszeichen wird vollumfänglich Bezug genommen auf die vorhergehende Beschreibung zu den Figuren 1 bis 7.

## Patentansprüche

1. Halteelement für Leitungsstränge (30), insbesondere Kabelstränge, mit einer Basis (11) zur Anlage an ein Bauteil (40), und mit wenigstens zwei, seitlich von einem Durchführungsraum (20) für den zumindest einen Leitungsstrang (30), angeordneten Haltegliedern (14, 15) die von der Basis (11) abragen,
**gekennzeichnet durch**
einen im Wesentlichen flach-kegelförmigen Habitus, wobei die Halteglieder (14, 15) jeweils Kegelflanken (16, 17) des Halteelementes (10) ausbilden.

2. Halteelement nach Anspruch 1, **dadurch gekennzeichnet, dass** die Höhe (H) des Halteelements (10) höchstens halb so gross wie die grösste Weite (W) der Basis (11).

3. Halteelement nach Anspruch 1 oder 2, **dadurch gekennzeichnet, dass** die Halteglieder (14, 15) als Klemmglieder ausgebildet sind, deren dem Durchführungsraum (20) zugewandte Innenseiten (18, 19) bogenförmig gewölbt ausgebildet sind.

4. Halteelement nach einem der Ansprüche 1 bis 3, **dadurch gekennzeichnet, dass** die Basis (11) eine Ansatzfläche (21) zum Ansetzen an ein Bauteil (40) aufweist, die im Ausgangszustand zum Durchführungsraum (20) hin aufgewölbt ist.

5. Halteelement nach einem der Ansprüche 1 bis 4, **gekennzeichnet durch** einen kreiskegelförmigen Habitus, wobei die Basis (11) einen runden Querschnitt aufweist.

6. Halteelement, nach einem der Ansprüche 1 bis 4, **gekennzeichnet durch** einen pyramidalen Habitus, wobei die Basis (11) einen vieleckigen Querschnitt aufweist.

7. Halteelement nach einem der Ansprüche 1 bis 6, **dadurch gekennzeichnet, dass** der Durchführungsraum (20) im Wesentlichen parallel zur Basis (11) verläuft.

8. Halteelement nach einem der Ansprüche 1 bis 7, **dadurch gekennzeichnet, dass** es aus einem hoch-schlagzähen bis elastomeren Material besteht.

9. Halteelement nach einem der Ansprüche 1 bis 8, **dadurch gekennzeichnet, dass** es aus Reifengummi besteht.

10. Halteelement nach einem der Ansprüche 1 bis 8, **dadurch gekennzeichnet, dass** es als dünnwandiger Hohlkörper ausgebildet ist.

11. Halteelement nach einem der Ansprüche 1 bis 8 und 10, **dadurch gekennzeichnet, dass** es wenigstens einen geschlossenen Hohlraum (26) aufweist.

12. Halteelement nach einem der Ansprüche 1 bis 8 und 10 bis 11, **dadurch gekennzeichnet, dass** ein umlaufender Rand der Basis (11) als Dichtlippe (25) ausgebildet ist.

13. Halteelement nach einem der Ansprüche 1 bis 8 und 10 bis 12, **dadurch gekennzeichnet, dass** es aus einem thermoplastischen Kunststoff besteht.

## Claims

1. Holding device for conductor harnesses (30), especially cable harnesses, having a base (11) to be applied against a structural part (40), and having at least two holding limbs (14, 15) which are arranged laterally of a guide chamber (20) for the at least one conductor harness (30) and which project from the base (11), **characterised by** its essentially shallow tapered form, the holding limbs (14, 15) respectively constituting tapered flanks (16, 17) of the holding device (10).

2. Holding device according to claim 1. **characterised in that** the height (H) of the holding device (10) is at most half the size of the maximum width (W) of the base (11).

3. Holding device according to claim 1 or 2, **characterised in that** the holding limbs (14, 15) are formed as clamping limbs, whose inner surfaces (18, 19) facing the guide chamber (20) are arcuately bowed.

4. Holding device according to one of claims 1 to 3, **characterised in that** the base (11) has an attachment surface (21) for attachment to a structural part (40) and which in the start condition is bowed towards the guide chamber (20).

5. Holding device according to one of claims 1 to 4. **characterised by** its circular conical form, the base (11) being of round cross section.

6. Holding device according to one of claims 1 to 4, **characterised by** its pyramidal form, the base (11) being of many angled cross section.

7. Holding device according to one of claims 1 to 6, **characterised in that** the guide chamber (20) extends essentially parallel with respect to the base (11).

8. Holding device according to one of claims 1 to 7, **characterised in that** it consists of a material that is of high impact strength to elastomeric.

9. Holding device according to one of claims 1 to 8, **characterised in that** it consists of tyre rubber.

10. Holding device according to one of claims 1 to 8, **characterised in that** it is formed as a thin walled hollow body.

11. Holding device according to one of claims 1 to 8 and 10, **characterised in that** it has at least one closed hollow chamber (26).

12. Holding device according to one of claims 1 to 8 and 10 to 11, **characterised in that** a peripheral rim of the base (11) is formed as a sealing lip (25).

13. Holding device according to one of claims 1 to 8 and 10 to 12, **characterised in that** it consists of thermoplastic plastics material.

## Revendications

1. Élément de retenue pour faisceaux de conduites (30), en particulier pour faisceaux de câbles, comprenant une base (11) à appliquer sur un élément de construction (40), et comprenant au moins deux corps de retenue (14, 15) qui sont disposés latéralement par rapport à un espace de passage (20) pour la ligne de conduites (30) au nombre d'au moins une et qui font saillie par rapport à la base (11), **caractérisé par** un aspect sensiblement de cône aplati les corps de retenue (14, 15) formant chacun des flancs coniques (16, 17) de l'élément de retenue (10).

2. Élément de retenue selon la revendication 1, **caractérisé en ce que** la hauteur (H) de l'élément de retenue (10) correspond au plus à la moitié de la largeur maximale (W) de la base (11).

3. Élément de retenue selon la revendication 1 ou 2, **caractérisé en ce que** les corps de retenue (14, 15) sont conformés en corps de serrage dont les côtés intérieurs (18, 19) tournés vers l'espace de passage (20) sont cintrés sous forme arquée.

4. Élément de retenue selon une des revendications 1 à 3, **caractérisé en ce que** la base (11) comporte, pour la poser sur un élément de construction (40), une surface de pose (21) qui, à l'état initial, est bombée en direction de l'espace de passage (20).

5. Élément de retenue selon une des revendications 1 à 4, **caractérisé par** un aspect de cône de révolution, la base (11) présentant une section ronde.

6. Élément de retenue selon une des revendications 1 à 4, **caractérisé par** un aspect pyramidal, la base (11) présentant une section polygonale.

7. Élément de retenue selon une des revendication 1 à 6, **caractérisé en ce que** l'espace de passage (20) s'étend sensiblement parallèlement à la base (11).

8. Élément de retenue selon une des revendications 1 à 7, **caractérisé en ce qu'**il est constitué d'un matériau élastomère à haute résistance aux chocs.

9. Élément de retenue selon une des revendications 1 à 8, **caractérisé en ce qu'**il est constitué de caoutchouc pour pneumatiques.

10. Élément de retenue selon une des revendications 1 à 8, **caractérisé en ce qu'**il est conformé en corps creux à paroi mince.

11. Élément de retenue selon une des revendications 1 à 8 et 10, **caractérisé en ce qu'**il comporte au moins une cavité fermée (26).

12. Élément de retenue selon une des revendications 1 à 8 et 10 à 11, **caractérisé en ce qu'**un bord périphérique de la base (11) est conformé en lèvre d'étanchéité (25).

13. Élément de retenue selon une des revendications 1 à 8 et 10 à 12, **caractérisé en ce qu'**il est constitué de matière thermoplastique.
